# EUROPEAN PATENT SPECIFICATION

(11) **EP 4 401 111 B1**
(45) Date of publication and mention of the grant of the patent: **09.07.2025**
(21) Application number: 24150385.3
(22) Date of filing: 04.01.2024
(51) Int. Cl.: H01J 49/00, G01N 30/72, G01N 30/86

(54) **MASS SPECTROMETRY SYSTEM AND PEAK EVALUATION METHOD**
MASSENSPEKTROMETRIESYSTEM UND VERFAHREN ZUR SPITZENWERTBEURTEILUNG
SYSTÈME DE SPECTROMÉTRIE DE MASSE ET PROCÉDÉ D'ÉVALUATION DE PIC

(30) Priority: 13.01.2023 JP 2023003556
(43) Date of publication of application: 17.07.2024
(73) Proprietor: JEOL Ltd., Akishima, Tokyo 196-8558 (JP)
(72) Inventor: TANAKA, Hirokazu, Tokyo, 196-8558 (JP)
(74) Representative: Boult Wade Tennant LLP

(56) References cited:
- JP-A- 2011 242 255
- JP-A- 2019 066 338
- JP-B2- 4 860 575
- US-A1- 2018 218 892

## Description

### TECHNICAL FIELD

The present disclosure relates to a mass spectrometry system and a peak evaluation method, and more particularly to evaluation of quantification ion peaks and identification ion peaks.

### BACKGROUND

In a quantitative analysis of a sample, a mass spectrometry system is used. The mass spectrometry system is composed of, for example, a gas chromatograph, a mass spectrometry device, and an information processing device. In the gas chromatograph, a plurality of compounds are sequentially extracted from the sample. Those compounds are sequentially introduced into the mass spectrometry device. In the mass spectrometry device, mass spectrometry is sequentially executed on the respective compounds. At that time, for quantification of each compound, a quantification ion and an identification ion are detected, which are designated for each compound. As a result, a plurality of peak sets derived from the compounds are obtained. Specifically, each of the peak sets is composed of a peak generated by detecting the quantification ion (hereinafter referred to as a quantification ion peak) and a peak generated by detecting the identification ion (hereinafter referred to as an identification ion peak). Both of these peaks are representative peaks characteristic to a compound.

For example, in a mass spectrum of a certain compound, an ion that produces the largest peak is designated as the quantification ion, and an ion that produces the second largest peak is designated as the identification ion. A quantification ion peak is also called a target ion peak. An identification ion peak is also called a reference ion peak.

In some cases, a plurality of identification ion peaks may be referred to for each compound.

In the information processing device within the mass spectrometry system, the peak sets generated from the compounds are evaluated. Generally, for each compound, a measured retention time at which the quantification ion peak is generated is compared with a standard retention time of that compound to thereby calculate a retention time error. Further, for each compound, a measured peak ratio between the quantification ion peak and the identification ion peak is calculated, and the measured peak ratio is compared with a standard peak ratio of that compound to thereby calculate a peak ratio error (more specifically, a relative peak ratio error). A peak ratio is also called an IQ ratio or I/Q. Evaluation of peak ratio error is also referred to as ratio check.

For each compound, the retention time error is evaluated, and also the peak ratio error is evaluated. After determining that the peak sets corresponding to the compounds are adequate, for example, it is determined that the result of quantification of each compound is adequate. Adequacy of the peak sets may be checked before creating a calibration curve.

A user is required to check evaluation results of a large number of peak sets corresponding to a large number of compounds separated from a sample. When a plurality of samples are the measurement targets, a still larger number of evaluation results must be checked.

Document 1 (JP 2011-242255 A) discloses a mass spectrometry system. In this mass spectrometry system, when displaying a quantification ion peak and an identification ion peak, two lines indicating an allowable margin of error are displayed. Document 1 does not disclose any image which allows recognition of evaluation results of a plurality of peak sets at one sight.

Document 2 (JP 2019-066338 A) discloses a mass spectrometry system, a peak evaluation method and a program according to the preambles of claims 1, 10 and 11 respectively.

The present disclosure is directed to enabling a user to see, in one view, evaluation results of a plurality of peak sets obtained from a plurality of compounds. Alternatively, the present disclosure is directed to providing information indicating a trend of overall evaluation results of a plurality of peak sets obtained from a plurality of compounds.

### SUMMARY

A mass spectrometry system according to an aspect of the present disclosure includes: a mass spectrometry device configured to perform mass spectrometry on a plurality of compounds sequentially separated from a sample and thereby generate quantification ion peaks and identification ion peaks derived from the compounds; a first processing unit configured to identify, based on the quantification ion peaks and the identification ion peaks, measured retention times and measured peak ratios corresponding to the compounds; a second processing unit configured to calculate retention time errors by comparing the measured retention times with standard retention times of the compounds, and calculate peak ratio errors by comparing the measured peak ratios with standard peak ratios of the compounds; and a third processing unit configured to plot, in a coordinate system with a retention time error axis and a peak ratio error axis, a plurality of elements representing error sets composed of the retention time errors and the peak ratio errors, and thereby create a chart for evaluating the quantification ion peaks and the identification ion peaks.

A peak evaluation method according to an aspect of the present disclosure includes: identifying, based on quantification ion peaks and identification ion peaks derived from a plurality of compounds, measured retention times and measured peak ratios corresponding to the compounds; calculating retention time errors by comparing the measured retention times with standard retention times of the compounds, and calculating peak ratio errors by comparing the measured peak ratios with standard peak ratios of the compounds; and plotting, in a coordinate system with a retention time error axis and a peak ratio error axis, a plurality of elements representing error sets composed of the retention time errors and the peak ratio errors, and thereby creating a chart for evaluating the quantification ion peaks and the identification ion peaks.

### BRIEF DESCRIPTION OF DRAWINGS

Embodiment(s) of the present disclosure will be described based on the following figures, wherein:
FIG. 1 is a block diagram showing a mass spectrometry system according to an embodiment;
FIG.2 is a diagram showing an array of peaks and an extracted ion chromatogram;
FIG. 3 is a diagram illustrating a first error calculation and a second error calculation;
FIG. 4 is a diagram showing a display example;
FIG. 5 is a diagram showing a first example of a chart;
FIG. 6 is a diagram showing a second example of the chart;
FIG. 7 is a diagram showing a third example of the chart;
FIG. 8 is a diagram illustrating a specific example of peak correction; and
FIG. 9 is a flowchart illustrating a peak evaluation method according to an embodiment.

### DESCRIPTION OF EMBODIMENTS

Embodiments will now be described by reference to the drawings.

### (1) Overview of Embodiments

A mass spectrometry system according to an embodiment includes a mass spectrometry device, a first processing unit (or first processor), a second processing unit (or second processor), and a third processing unit (or third processor). The mass spectrometry device performs mass spectrometry or mass analysis on a plurality of compounds sequentially separated from a sample, and thereby generates quantification ion peaks and identification ion peaks derived from the compounds. The first processing unit identifies, based on the quantification ion peaks and the identification ion peaks, measured retention times and measured peak ratios corresponding to the compounds. The second processing unit calculates retention time errors by comparing the measured retention times with standard retention times of the compounds, and calculates peak ratio errors by comparing the measured peak ratios with standard peak ratios of the compounds. The third processing unit plots, in a coordinate system with a retention time error axis and a peak ratio error axis, a plurality of elements representing error sets composed of the retention time errors and the peak ratio errors, and thereby creates a chart for evaluating the quantification ion peaks and the identification ion peaks.

According to the above configuration, through observation of the chart, evaluation results of the plurality of peak sets can be intuitively understood at one sight. For example, a general trend of the peak sets can be understood from the density, form, centroid, and the like of a group of elements, which is composed of the plurality of elements. Furthermore, a peak set with a large error can be easily identified, and at that time, the type and size of the error can be easily identified.

In an embodiment, the chart has a two-dimensional coordinate system. Alternatively, a chart having a three-dimensional coordinate system may be created. A chart showing compounds contained in a plurality of samples may be created, or a chart showing selected compounds may be created. The above-noted peak ratio errors can include relative peak ratio errors. The above-noted retention times can include retention indexes (RI). The above-noted error sets can include error pairs.

A mass spectrometry system according to an embodiment includes an evaluation unit (or evaluator) configured to evaluate the retention time errors and the peak ratio errors. The chart contains information representing a result of evaluation by the evaluation unit. According to this configuration, judgment of adequacy/inadequacy of each peak set is facilitated.

In an embodiment, the evaluation unit determines whether or not each retention time error is within a first allowable range, and determines whether or not each peak ratio error is within a second allowable range. The above-noted result of evaluation contains a determination result as to whether or not each retention time error is within the first allowable range, and a determination result as to whether or not each peak ratio error is within the second allowable range.

In an embodiment, the above-noted information includes an object indicating the first allowable range and the second allowable range. The object is, for example, a graphic. The graphic may include a first graphic indicating the first allowable range and a second graphic indicating the second allowable range. In an embodiment, a common first allowable range is designated for the plurality of compounds, and a common second allowable range is designated for the plurality of compounds. Alternatively, the first allowable range and the second allowable range may be designated separately for each compound.

In an embodiment, the third processing unit changes a display format of the elements based on the result of evaluation by the evaluation unit. The above-noted information includes the display format of the elements. The display format can include shape, color, and the like of the elements.

In an embodiment, the third processing unit causes to display a specific quantification ion peak and a specific identification ion peak corresponding to a specific element selected by a user from among the elements. A correction unit (or corrector) corrects the specific quantification ion peak and the specific identification ion peak according to an instruction by the user. In accordance with the correction of the specific quantification ion peak and the specific identification ion peak, a display position of the specific element in the chart is changed.

Each of the elements in the chart is correlated with a certain error set, or in other words, is correlated with a certain peak set. Based on a selected specific element, a peak set correlated therewith is identified. When a result of peak correction is reflected in the chart, it becomes easy to check appropriateness of the peak correction work and to check the peak correction result.

In an embodiment, each identification ion peak includes a first identification ion peak and a second identification ion peak. Each measured peak ratio includes a first measured peak ratio and a second measured peak ratio. Each peak ratio error includes a first peak ratio error and a second peak ratio error. The elements include first elements representing error sets composed of the retention time errors and the first peak ratio errors, and second elements representing error sets composed of the retention time errors and the second peak ratio errors. According to this configuration, identification of compounds can be performed more accurately.

In an embodiment, the chart contains a plurality of links showing correspondence relationships between the first elements and the second elements. The links are lines parallel to the peak ratio error axis and connecting between the first elements and the second elements. This configuration facilitates identification of element arrays corresponding to the respective compounds.

A peak evaluation method according to an embodiment includes a first processing step, a second processing step, and a third processing step. In the first processing step, based on quantification ion peaks and identification ion peaks derived from a plurality of compounds, measured retention times and measured peak ratios corresponding to the compounds are identified. In the second processing step, retention time errors are calculated by comparing the measured retention times with standard retention times of the compounds, and peak ratio errors are calculated by comparing the measured peak ratios with standard peak ratios of the compounds. In the third processing step, a plurality of elements representing error sets composed of the retention time errors and the peak ratio errors are plotted in a coordinate system with a retention time error axis and a peak ratio error axis, and a chart for evaluating the quantification ion peaks and the identification ion peaks is thereby created.

A program for executing the above method is installed into an information processing device via a network or a transportable storage medium. The information processing device includes a non-transitory storage medium in which the program is stored.

### (2) Details of Embodiments

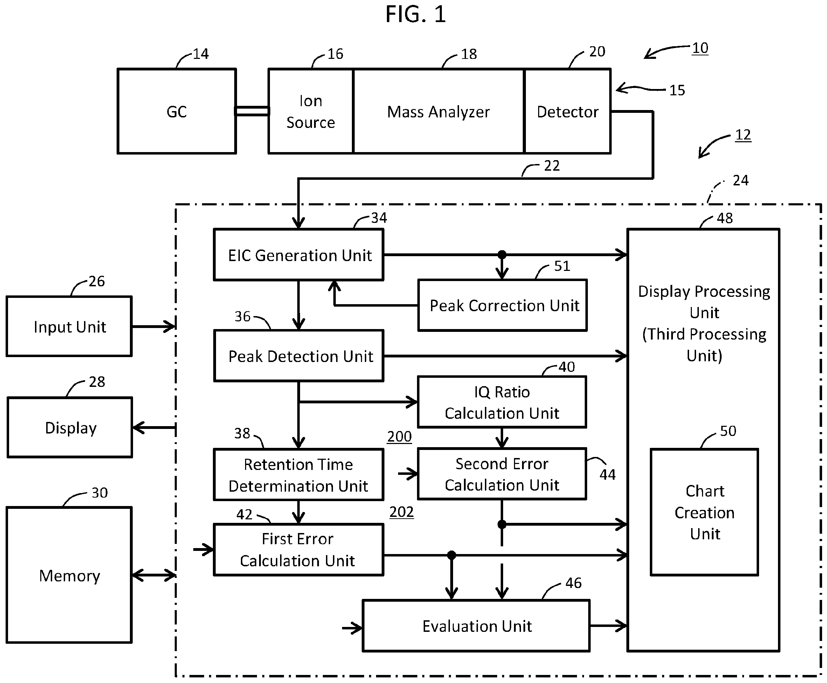

FIG. 1 shows a mass spectrometry system according to an embodiment. This mass spectrometry system is used for quantitative analysis of a plurality of compounds contained in a sample. The mass spectrometry system is composed of a measurement unit 10 and an information processing device 12. The measurement unit 10 is composed of a gas chromatograph 14 and a mass spectrometry device 15.

In the gas chromatograph 14, a plurality of compounds are sequentially separated from a sample. Those compounds are sequentially introduced into the mass spectrometry device 15. A liquid chromatograph may be used instead of the gas chromatograph 14.

The mass spectrometry device 15 sequentially executes mass spectrometry on samples sequentially introduced therein. The mass spectrometry device 15 comprises an ion source 16, a mass analyzer 18, and a detector 20. In the ion source 16, each sample is ionized. As the ionization method, various ionization methods can be employed. Ions produced by ionization are introduced into the mass analyzer 18. The mass analyzer 18 is composed of, for example, a quadrupole mass analyzer (a quadrupole mass spectrometer). Ions that have passed through the mass analyzer 18 are detected in the detector 20.

In actual practice, mass spectrometry is performed on ions (or extracted ions) that satisfy mass-to-charge ratio (m/z) conditions set in advance for each sample. Those ions are, more specifically, the quantification ion and the identification ion. During a detection period corresponding to each sample, a first mass-to-charge ratio for detecting the quantification ion and a second mass-to-charge ratio for detecting the identification ion are set alternately. With this arrangement, a detection signal 22 containing information on a quantification ion peak and an identification ion peak can be obtained. Electric circuitry that performs signal processing with respect to the detection signal 22 is not shown in drawing.

For each compound, a plurality of identification ions may be detected. An array of mass spectrums may be obtained by scanning a mass-to-charge ratio at each time point on the retention time axis. Generally, in a mass spectrum of a compound, an ion that produces the largest peak is designated as the quantification ion, and an ion that produces the second largest peak is designated as the identification ion.

The information processing device 12 is specifically composed of a computer. The information processing device 12 comprises an information processing unit 24, an input unit 26, a display 28, a memory 30, and the like. The information processing unit 24 is composed of a processor. The processor is, for example, a CPU for executing a program. The information processing unit 24 may be composed of a plurality of processors.

The input unit 26 is composed of a keyboard, a pointing device, or the like. The display 28 is composed of a liquid crystal display, an organic EL display device, or the like. The memory 30 has stored therein information necessary for mass spectrometry and quantitative analysis. Information generated by mass spectrometry and quantitative analysis is also stored into the memory 30. In an embodiment, a sample list and a compound list are stored in the memory 30, as described later.

In FIG. 1, functions exhibited by the information processing unit 24 are represented by blocks. The information processing unit 24 includes an EIC generation unit 34, a peak detection unit 36, a retention time determination unit 38, an IQ ratio calculation unit 40, a first error calculation unit 42, a second error calculation unit 44, an evaluation unit 46, a display processing unit 48, and a peak correction unit 51. Operation of the mass spectrometry device 15 is controlled by the information processing unit 24.

The EIC generation unit 34 is a module that generates extracted ion chromatograms (EICs) based on the detection signal 22 output from the mass spectrometry device 15. On the retention time axis, a plurality of detection periods corresponding to the respective compounds are designated. For each compound, within a detection period corresponding to that compound, a first mass-to-charge ratio for detecting the quantification ion and a second mass-to-charge ratio for detecting the identification ion are set alternately. The EIC generation unit 34 generates, as the extracted ion chromatograms, a quantification ion chromatogram and an identification ion chromatogram based on a detection signal sequence obtained over the plurality of detection periods.

The peak detection unit 36 detects quantification ion peaks corresponding to the compounds, which are included in the quantification ion chromatogram. Further, the peak detection unit 36 detects identification ion peaks corresponding to the compounds, which are included in the identification ion chromatogram. In detecting the peaks, known peak detection methods can be used. As a result, a plurality of peak sets corresponding to the compounds are identified. Each peak set is composed of a quantification ion peak and an identification ion peak characteristic to a certain compound.

The retention time determination unit 38 serves to identify, for each compound, a retention time at which the quantification ion peak has generated. The retention time may be identified on the basis of the identification ion peak, or may be identified based on both the quantification ion peak and the identification ion peak. The retention time may be identified based on a centroid or an apex of a peak. A retention time determined by the retention time determination unit 38 is hereinafter referred to as a measured retention time.

The IQ ratio calculation unit 40 calculates, for each compound, an IQ ratio (namely, I/Q), which is a peak ratio. The IQ ratio is, more specifically, a ratio having the intensity of the quantification ion peak as denominator and the intensity of the identification ion peak as numerator. The intensity of each peak is, for example, an area of the peak. The intensity of each peak may be identified by a height or the like of the peak. An IQ ratio calculated by the IQ ratio calculation unit 40 is hereinafter referred to as a measured IQ ratio.

The first error calculation unit 42 refers to information in the memory 30 and identifies a standard retention time for each compound. Subsequently, for each compound, the first error calculation unit 42 compares the measured retention time with the standard retention time, and calculates a first error (or retention time error) as a difference between the two. More specifically, the first error is obtained by calculating (Measured retention time - Standard retention time). Some other error related to retention time may be designated as the first error.

The second error calculation unit 44 refers to information in the memory 30 and identifies a standard IQ ratio for each compound. Subsequently, for each compound, the second error calculation unit 44 calculates a second error (or IQ ratio error) based on the measured IQ ratio and the standard IQ ratio. More specifically, the second error is obtained by calculating [(Measured IQ ratio - Standard IQ ratio) / Standard IQ ratio] * 100 (%). The second error is in fact a relative error. Some other error (or relative error) related to IQ ratio may be designated as the second error. For each compound, an error pair (or error set) composed of the first error and the second error is identified.

The evaluation unit 46 separately evaluates the first error and the second error calculated for each compound. More specifically, the evaluation unit 46 determines whether or not the first error is within a first allowable range having the standard retention time at the center, and determines whether or not the second error is within a second allowable range which is an allowable range of relative error. The results of evaluation; namely, the two determination results, are transmitted to the display processing unit 48.

In an embodiment, a common first allowable range is used for the plurality of compounds, and similarly, a common second allowable range is used for the plurality of compounds. However, the first allowable range and the second allowable range may be designated separately for each compound.

The display processing unit 48 is a module that generates images to be displayed on the display 28. The display processing unit 48 according to an embodiment comprises a chart creation unit 50. The chart creation unit 50 serves to create a chart by plotting, in a predetermined coordinate system, a plurality of elements (in actual practice, a plurality of points) representing the error pairs corresponding to the compounds. The chart contains a graphic indicating the first allowable range and the second allowable range. The result of evaluation by the evaluation unit 46 is reflected in the chart as necessary. The chart will be described in detail further below.

The peak correction unit 51 serves to correct, according to an instruction by a user, a peak (namely, a quantification ion peak or an identification ion peak) selected by the user. For example, the shape of the selected peak is corrected, or a correction is made to a part of the selected peak to be included in area calculation. The result of peak correction is reflected in the chart. The result of peak correction may be reflected in the chart at the point of completion of a peak correction operation, or a content of peak correction may be reflected in real time.

In an embodiment, the retention time determination unit 38 and the IQ ratio calculation unit 40 function as a first processing unit 200. The first error calculation unit 42 and the second error calculation unit 44 function as a second processing unit 202. The display processing unit 48 functions as a third processing unit. Mass spectrometry conditions and the like are set by the user using the input unit 26. Images shown later are displayed on the display 28. The chart is included in those images.

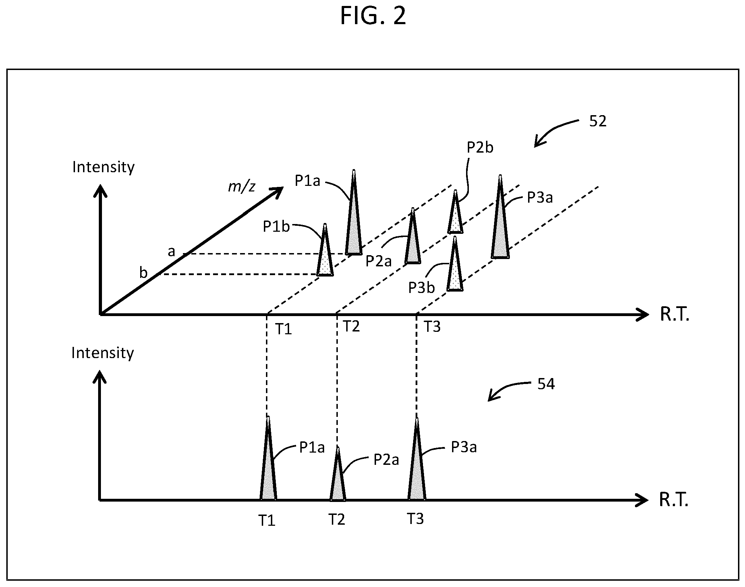

FIG. 2 shows a coordinate space defined by a retention time axis (or RT axis), a mass-to-charge ratio axis (or m/z axis), and an intensity axis. The coordinate space contains an array of peaks 52. For example, in a first detection period, mass-to-charge ratio a and mass-to-charge ratio b are set alternately in the mass analyzer, and as a result, quantification ion peak P1a and identification ion peak P1b are observed. Each of these peaks is a peak on the retention time axis. Within the first detection period, retention time T1 at which the quantification ion peak P1a has generated is identified. During a second detection period, quantification ion peak P2a and identification ion peak P2b are observed, and retention time T2 is identified within the second detection period. During a third detection period, quantification ion peak P3a and identification ion peak P3b are observed, and retention time T3 is identified within the third detection period. As a result of such observations, a quantification ion chromatogram 54 is generated, which contains quantification ion peaks P1a, P2a, P3a on the retention time axis. Similarly, an identification ion chromatogram (not shown in drawing) is generated, which contains identification ion peaks P1b, P2b, P3b on the retention time axis.

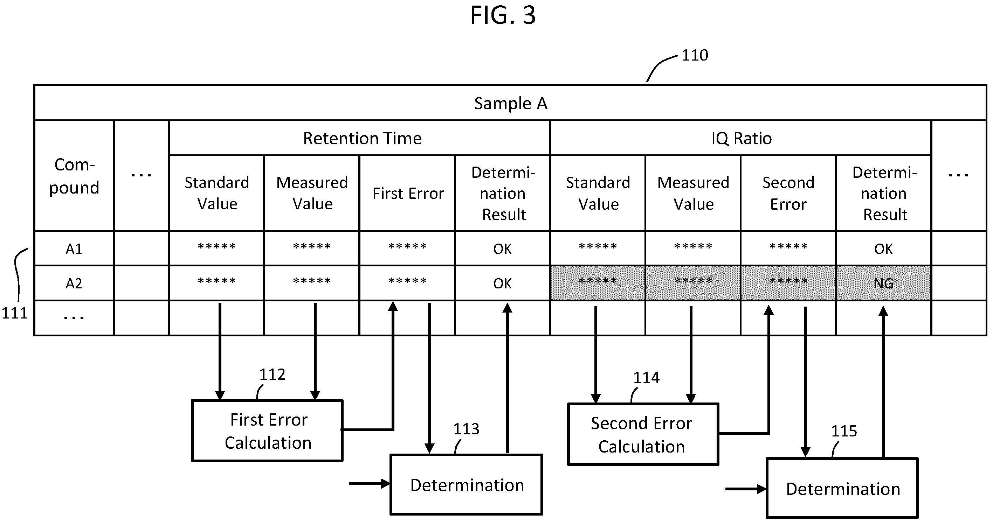

FIG. 3 shows a compound list 110 by way of example. The compound list 110 contains a plurality of records 111 corresponding to compounds sequentially extracted from sample A. Each record 111 includes, in addition to information identifying a compound (namely, compound name), information indicating a standard retention time, a measured retention time, a first error, a first determination result, a standard IQ ratio, a measured IQ ratio, a second error, and a second determination result. The above-noted first processing unit calculates the first error based on the standard retention time and the measured retention time (see reference numeral 112), and also calculates the second error based on the standard IQ ratio and the measured IQ ratio (see reference numeral 114). The above-noted second processing unit determines whether or not the first error is within the first allowable range (see reference numeral 113), and also determines whether or not the second error is within the second allowable range (see reference numeral 115). In FIG. 3, items determined NG are shown by gray shading.

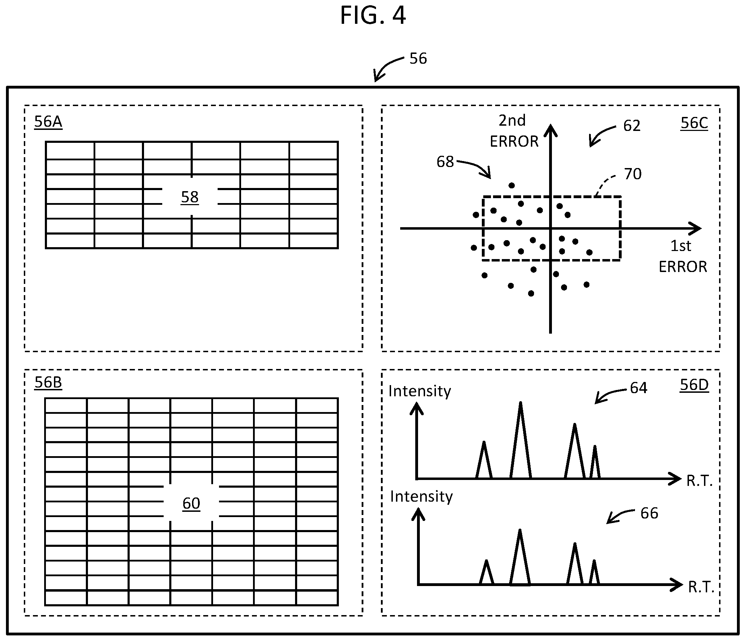

FIG. 4 shows an example image displayed on the display. The image 56 shown includes four areas 56A, 56B, 56C, 56D.

In area 56A, a sample list 58 is displayed. The sample list 58 contains a plurality of records corresponding to samples. Each record includes, for example, sample number, measurement method name, measurement data name, measurement date and time, sample name, sample type (such as standard sample or sample for quantification), comments, and the like. By selecting a row, a measurement target is designated.

In area 56B, a compound list 60 is displayed. The compound list 60 is composed of a plurality of records corresponding to compounds constituting a specific sample, as shown in FIG. 3. Each record includes compound number, compound name, standard retention time, measured retention time, first error, first allowable range, first determination result, standard IQ ratio, measured IQ ratio, second error, second allowable range, second determination result, quantification ion peak area, quantification ion peak height, identification ion peak area, identification ion peak height, quantified amount, and the like.

At the time of performing peak correction, a specific compound (in other words, a specific peak set) can be designated by selecting a specific point on the chart described later, or a specific compound (in other words, a specific peak set) can be designated by selecting a specific row in the compound list 60.

In the case where a quantification ion peak could not be detected, the measured retention time and the measured IQ ratio are not calculated, and each of the two cells corresponding to these measured values is left blank. In the case where an identification ion peak could not be detected, the measured IQ ratio is not calculated, and the cell corresponding to this measured value is left blank. Regarding a compound for which such a blank cell has occurred, no error evaluation is performed, and no plotting in the chart is carried out.

In area 56C, a chart 62 is displayed. The chart 62 has a first error axis (or retention time error axis) and a second error axis (or IQ ratio error axis). The first error axis and the second error axis are perpendicular to each other, and a group of points 68 is mapped in the two-dimensional coordinate space defined by those axes. The group of points 68 is composed of a plurality of points corresponding to compounds (more specifically, error pairs). Reference numeral 70 denotes an adequacy region defined by the first allowable range and the second allowable range, and the region outside the adequacy region 70 is an inadequacy region. From the proportion of points located within the adequacy region 70 among the entire group of points 68, adequacy of the overall peak sets can be evaluated at one sight. From the manner of spreading, the centroid, the density, and the like of the group of points 68, a trend of the peak sets can be understood. The chart 62 will be described in detail further below using specific examples.

In area 56D, a quantification ion chromatogram 64 and an identification ion chromatogram 66 are displayed. In displaying the chromatograms, each chromatogram may be displayed in its entirety, or a part of each chromatogram may be enlarged and displayed. At the time of performing peak correction, parts containing a specific peak set corresponding to a specific compound are enlarged and displayed.

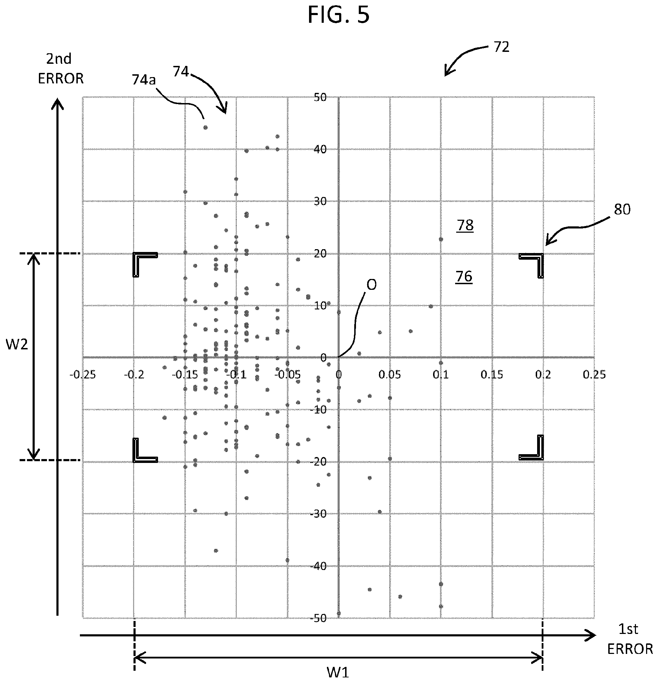

FIG. 5 shows a first example of the chart. In the chart 72 shown, the horizontal axis is the first error axis, and the vertical axis is the second error axis. The two axes may be interchanged. The origin of the two-dimensional coordinate system is denoted by O. A group of points 74 is composed of a plurality of points 74a distributed in the two-dimensional coordinate system. Each individual point 74a corresponds to a specific compound, or in other words, corresponds to a specific peak set. A marker 80 is a display object indicating the adequacy region identified by a first allowable range w1 and a second allowable range w2. In the example shown, the marker 80 is composed of four graphics specifying four corners of an adequacy region 76. As the marker 80, two vertical lines and two horizontal lines defining four sides of the adequacy region 76 may be displayed. The region surrounding the adequacy region 76 is an inadequacy region 78.

When a point corresponding to a compound to be quantified is located within the inadequacy region 78, peak correction is applied as necessary. When the overall group of points 74 is shifted toward the right or the left, the retention time axis itself may be corrected. When a large number of points are located in the inadequacy region 78, a judgment as to the necessity for remeasurement may be made. To each point, a compound identifier may be appended. When measurement results of a plurality of samples are reflected in the chart, the shapes and colors of the respective points may be changed for each sample.

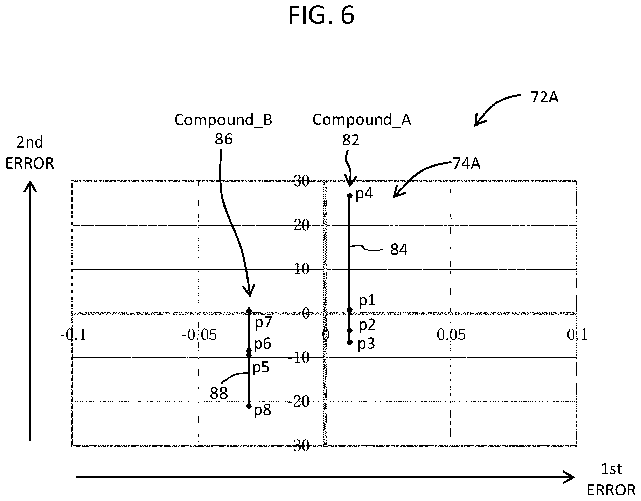

FIG. 6 shows a second example of the chart. For each compound, first to fourth identification ions are detected as the identification ion. Accordingly, first to fourth IQ ratios are calculated, and based thereon, first to fourth IQ ratio errors are calculated.

In the chart 72A, for each compound, an error set is expressed as an array of points. That is, a group of points 74A is composed of a plurality of point arrays 82, 86 corresponding to the respective compounds. For example, the point array 82 corresponding to compound A is composed of four points from point p1 to point p4, and the point array 86 corresponding to compound B is composed of four points from point p5 to point p8. In the point array 82, the four points p1 to p4 are connected by a line 84, and in the point array 86, the four points p5 to p8 are connected by a line 88.

The lines 84, 88 can be referred to as link information for identifying a point array for each compound. Since a single retention time error is determined for each compound, the four points constituting each point array 82, 86 are aligned on one straight line. That is, each of the lines 84, 88 is parallel to the IQ ratio error axis (or second error axis).

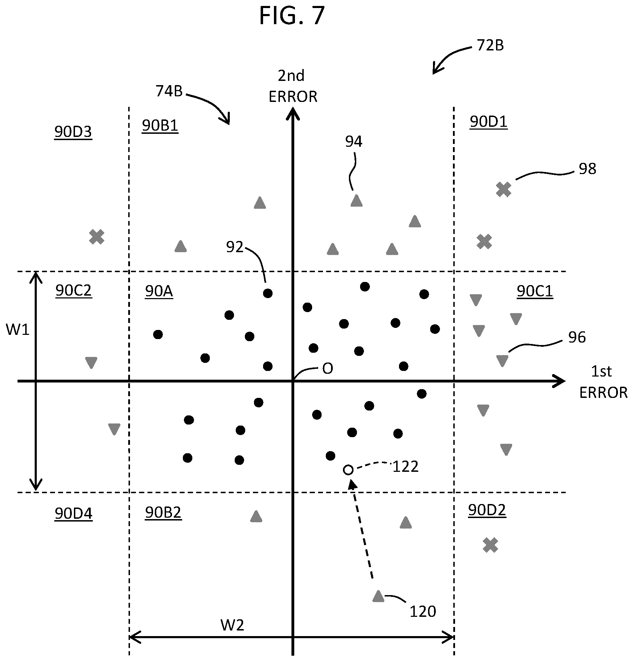

FIG. 7 shows a third example of the chart. Similarly in the chart 72B of the third example, the horizontal axis is the first error axis, and the vertical axis is the second error axis. In the two-dimensional coordinate system with the origin O at the center, there are plotted a group of points 74B composed of a plurality of points corresponding to compounds (or in other words, peak sets). Each point is a display element. By the first allowable range w1 and the second allowable range w2, a plurality of regions 90A, 90B 1, 90B2, 90C1, 90C2, 90D1, 90D2, 90D3, 90D4 are defined in the two-dimensional coordinate system.

Region 90A is a region (or adequacy region) within the first allowable range w1 and within the second allowable range w2. In the example shown, each of the points 92 located within region 90A has a circular form and is displayed in a first color (for example, green).

Each of region 90B1 and region 90B2 is a region (or inadequacy region) outside the first allowable range w1 and within the second allowable range w2. In the example shown, each of the points 94 located within region 90B1 and region 90B2 has a triangular form and is displayed in a second color (for example, yellow green).

Each of region 90C1 and region 90C2 is a region (or inadequacy region) within the first allowable range w1 and outside the second allowable range w2. In the example shown, each of the points 96 located within region 90C1 and region 90C2 has an inverted triangular form and is displayed in a third color (for example, orange).

Each of region 90D1, region 90D2, region 90D3, and region 90D4 is a region (or inadequacy region) outside the first allowable range w1 and outside the second allowable range w2. In the example shown, each of the points 98 located within region 90D1, region 90D2, region 90D3, and region 90D4 has a cross form and is displayed in a fourth color (for example, red).

By employing the display format as described above, it becomes possible for users to intuitively understand the state of the peak sets corresponding to the respective points. Further, it becomes possible for users to easily identify a peak set that should be corrected.

For example, when a point 120 is selected by a user, a peak set corresponding to the point 120 is displayed on the screen. This peak set is composed of a quantification ion peak and an identification ion peak. Either one or both of these peaks are corrected by the user. For example, a peak shape is corrected, or definition of a peak area is corrected. The result of such peak correction is reflected in the chart 72B. More specifically, the point 120 is deleted, and a point 122 in replacement thereof is displayed. The point 122 has a circular shape, and its color is the first color (in the above example, green). The content of the peak correction may be reflected in real time in the content of the chart 72B. In that case, the point 120 is shown moving on the chart 72B.

By repeating peak correction such as one described above, it is possible to eliminate apparent errors derived from inadequate peak detection.

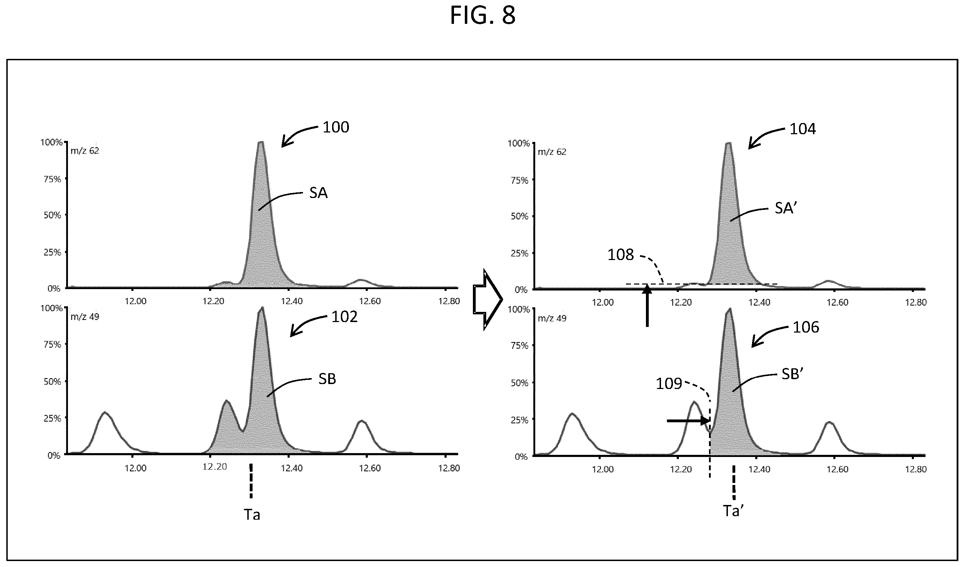

FIG. 8 shows an example peak correction. On the left side in FIG. 8, there are shown a quantification ion peak 100 and an identification ion peak 102 before correction. Peak separation is not appropriately performed, and a peak located adjacent to the quantification ion peak 100 is unduly included in area calculation. The calculated area is SA. In a similar manner, a peak located adjacent to the identification ion peak 102 is unduly included in area calculation. The calculated area is SB.

On the right side in FIG. 8, there are shown a quantification ion peak 104 and an identification ion peak 106 after correction. As to the quantification ion peak 104, the adjacent peak is excluded from area calculation by baseline shifting 108. The area calculated after the peak correction is SA'.

As to the identification ion peak 106, the adjacent peak is excluded from area calculation by splitting 109 using a vertical line. The area calculated after the peak correction is SB'. Although retention time Ta has been identified before the peak correction, retention time Ta' is identified after the peak correction.

Through observation of the chart, a peak set that requires peak correction can be identified easily, and a result of peak correction can be checked easily.

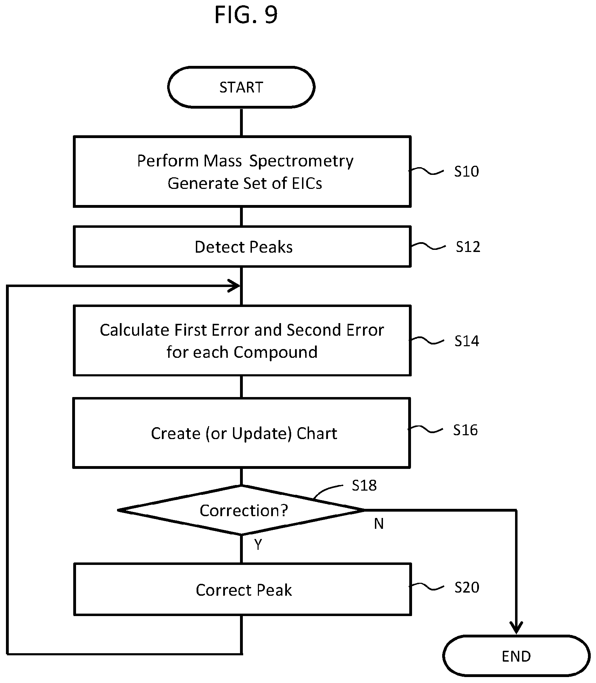

FIG. 9 illustrates, in a flowchart, a peak evaluation method according to an embodiment. In S10, mass spectrometry is performed on a plurality of compounds separated from a sample. As a result, a set of extracted ion chromatograms is generated, which is composed of a quantification ion chromatogram and an identification ion chromatogram.

In S12, peak detection is performed in each of the quantification ion chromatogram and the identification ion chromatogram. In S14, for each compound, a retention time is identified, and an IQ ratio is calculated. Subsequently, for each compound, an error pair composed of a first error and a second error is calculated. In S16, based on the error pairs corresponding to the respective compounds, a plurality of display elements (namely, a plurality of points) are plotted in a two-dimensional coordinate system. A chart is thereby created.

In S 18, whether or not peak correction is necessary is judged by a user who has observed the chart. When judged necessary, in S20, peak correction according to an instruction by the user is carried out. After that, the first error and the second error are recalculated in S14, and the chart is updated in S16. Peak correction is repeated until there is no more target of correction. When peak correction is no longer necessary, the present process is ended.

According to the above-described embodiment, through observation of the chart, evaluation results of peak sets obtained from a plurality of compounds can be understood at one sight. Further, through observation of the chart, a trend of overall evaluation results of peak sets obtained from a plurality of compounds can be understood. Furthermore, through observation of the chart, a target of peak correction can be identified easily, and adequacy of a result of peak correction can be checked.

The above evaluation method may be applied to quantification of dioxins.

The above evaluation method may also be used for evaluating adequacy of quantification conditions, for narrowing down compounds in composition estimation, or for verifying operation of a mass spectrometry device.

## Claims

1. A mass spectrometry system, comprising:
a mass spectrometry device configured to perform mass spectrometry on a plurality of compounds sequentially separated from a sample and thereby generate quantification ion peaks and identification ion peaks derived from the compounds;
a first processing unit (38, 40) configured to identify, based on the quantification ion peaks and the identification ion peaks, measured retention times and measured peak ratios corresponding to the compounds; and
a second processing unit (42, 44) configured to calculate retention time errors by comparing the measured retention times with standard retention times of the compounds, and calculate peak ratio errors by comparing the measured peak ratios with standard peak ratios of the compounds;
**characterized in that** the system comprises
a third processing unit (48) configured to plot, in a coordinate system with a retention time error axis and a peak ratio error axis, a plurality of elements representing error sets composed of the retention time errors and the peak ratio errors, and thereby create a chart (62, 72, 72A, 72B) for evaluating the quantification ion peaks and the identification ion peaks.

2. The mass spectrometry system according to claim 1, comprising
an evaluation unit (46) configured to evaluate the retention time errors and the peak ratio errors, wherein
the chart contains information indicating a result of evaluation by the evaluation unit.

3. The mass spectrometry system according to claim 2, wherein
the evaluation (46) unit is configured to determine whether or not each of the retention time errors is within a first allowable range, and to determine whether or not each of the peak ratio errors is within a second allowable range, and
the result of evaluation by the evaluation unit (46) contains a determination result as to whether or not each of the retention time errors is within the first allowable range, and a determination result as to whether or not each of the peak ratio errors is within the second allowable range.

4. The mass spectrometry system according to claim 3, wherein
the information includes an object (70, 80) indicating the first allowable range and the second allowable range.

5. The mass spectrometry system according to claim 3, wherein
the third processing unit (50) is configured to change a display format of the elements based on the result of evaluation by the evaluation unit, and
the information includes the display format of the elements.

6. The mass spectrometry system according to any preceding claim, wherein
the third processing unit (50) is configured to cause to display a specific quantification ion peak and a specific identification ion peak corresponding to a specific element selected by a user from among the elements,
a corrector (51) is provided, which is configured to correct the specific quantification ion peak and the specific identification ion peak according to an instruction by the user, and
in accordance with the correction of the specific quantification ion peak and the specific identification ion peak, a display position of the specific element in the chart is changed.

7. The mass spectrometry system according to any preceding claim, wherein
each of the identification ion peaks includes a first identification ion peak and a second identification ion peak,
each of the measured peak ratios includes a first measured peak ratio and a second measured peak ratio,
each of the peak ratio errors includes a first peak ratio error and a second peak ratio error, and
the elements include first elements representing error sets composed of the retention time errors and the first peak ratio errors, and second elements representing error sets composed of the retention time errors and the second peak ratio errors.

8. The mass spectrometry system according to claim 7, wherein
the chart (72A) contains a plurality of links (84, 88) showing correspondence relationships between the first elements and the second elements.

9. The mass spectrometry system according to claim 8, wherein
the links (84, 88) are lines parallel to the peak ratio error axis and connecting between the first elements and the second elements.

10. A peak evaluation method, comprising:
a step (S14) of identifying, based on quantification ion peaks and identification ion peaks derived from a plurality of compounds, measured retention times and measured peak ratios corresponding to the compounds; and
a step (S14) of calculating retention time errors by comparing the measured retention times with standard retention times of the compounds, and calculating peak ratio errors by comparing the measured peak ratios with standard peak ratios of the compounds;
**characterized in that** the method comprises
a step (S16) of plotting, in a coordinate system with a retention time error axis and a peak ratio error axis, a plurality of elements representing error sets composed of the retention time errors and the peak ratio errors, and thereby creating a chart (62, 72, 72A, 72B) for evaluating the quantification ion peaks and the identification ion peaks.

11. A program to be executed in an information processing device, comprising:
a function (38, 40) of identifying, based on quantification ion peaks and identification ion peaks derived from a plurality of compounds, measured retention times and measured peak ratios corresponding to the compounds; and
a function (42, 44) of calculating retention time errors by comparing the measured retention times with standard retention times of the compounds, and calculating peak ratio errors by comparing the measured peak ratios with standard peak ratios of the compounds;
**characterized in that** the program comprises
a function (48) of plotting, in a coordinate system with a retention time error axis and a peak ratio error axis, a plurality of elements representing error sets composed of the retention time errors and the peak ratio errors, and thereby creating a chart (62, 72, 72A, 72B) for evaluating the quantification ion peaks and the identification ion peaks.

## Patentansprüche

1. Massenspektrometriesystem, umfassend:
eine Massenspektrometrievorrichtung, welche dazu eingerichtet ist, an einer Mehrzahl von nacheinander aus einer Probe getrennten Verbindungen eine Massenspektrometrie durchzuführen und dadurch aus den Verbindungen abgeleitete Quantifizierungsionenpeaks und Identifizierungsionenpeaks zu erzeugen;
eine erste Verarbeitungseinheit (38, 40), welche dazu eingerichtet ist, auf Grundlage der Quantifizierungsionenpeaks und der Identifizierungsionenpeaks gemessene Retentionszeiten und gemessene Peakverhältnisse zu identifizieren, welche den Verbindungen entsprechen; und
eine zweite Verarbeitungseinheit (42, 44), welche dazu eingerichtet ist, durch Vergleichen der gemessenen Retentionszeiten mit Standardretentionszeiten der Verbindungen Retentionszeitfehler zu berechnen und durch Vergleichen der gemessenen Peakverhältnisse mit Standardpeakverhältnissen der Verbindungen Peakverhältnisfehler zu berechnen;
**dadurch gekennzeichnet, dass** das System eine dritte Verarbeitungseinheit (48) umfasst, welche dazu eingerichtet ist, in ein Koordinatensystem mit einer Retentionszeitfehlerachse und einer Peakverhältnisfehlerachse eine Mehrzahl von Elementen zu plotten, welche Fehlersätze darstellen, die aus den Retentionszeitfehlern und den Peakverhältnisfehlern bestehen, und dadurch ein Diagramm (62, 72, 72A, 72B) zum Auswerten der Quantifizierungsionenpeaks und der Identifizierungsionenpeaks zu erzeugen.

2. Massenspektrometriesystem nach Anspruch 1, umfassend
eine Auswertungseinheit (46), welche dazu eingerichtet ist, die Retentionszeitfehler und die Peakverhältnisfehler auszuwerten, wobei
das Diagramm Informationen enthält, welche ein Ergebnis einer Auswertung durch die Auswertungseinheit angeben.

3. Massenspektrometriesystem nach Anspruch 2, wobei
die Auswertungseinheit (46) dazu eingerichtet ist, zu bestimmen, ob jeder der Retentionszeitfehler innerhalb eines ersten zulässigen Bereichs liegt oder nicht, und zu bestimmen, ob jeder der Peakverhältnisfehler innerhalb eines zweiten zulässigen Bereichs liegt oder nicht, und
das Ergebnis einer Auswertung durch die Auswertungseinheit (46) ein Bestimmungsergebnis, ob jeder der Retentionszeitfehler innerhalb des ersten zulässigen Bereichs liegt oder nicht, und ein Bestimmungsergebnis enthält, ob jeder der Peakverhältnisfehler innerhalb des zweiten zulässigen Bereichs liegt oder nicht.

4. Massenspektrometriesystem nach Anspruch 3, wobei
die Informationen ein Objekt (70, 80) umfassen, welches den ersten zulässigen Bereich und den zweiten zulässigen Bereich angibt.

5. Massenspektrometriesystem nach Anspruch 3, wobei
die dritte Verarbeitungseinheit (50) dazu eingerichtet ist, auf Grundlage des Ergebnisses einer Auswertung durch die Auswertungseinheit ein Anzeigeformat der Elemente zu ändern, und
die Informationen das Anzeigeformat der Elemente umfassen.

6. Massenspektrometriesystem nach jeglichem vorhergehenden Anspruch, wobei
die dritte Verarbeitungseinheit (50) dazu eingerichtet ist, zu veranlassen, entsprechend einem durch einen Benutzer aus den Elementen ausgewählten spezifischen Element einen spezifischen Quantifizierungsionenpeak und einen spezifischen Identifizierungsionenpeak anzuzeigen,
eine Korrektureinrichtung (51) bereitgestellt ist, welche dazu eingerichtet ist, gemäß einer Anweisung durch den Benutzer den spezifischen Quantifizierungsionenpeak und den spezifischen Identifizierungsionenpeak zu korrigieren, und
im Einklang mit der Korrektur des spezifischen Quantifizierungsionenpeaks und des spezifischen Identifizierungsionenpeaks eine Anzeigeposition des spezifischen Elements in dem Diagramm geändert wird.

7. Massenspektrometriesystem nach jeglichem vorhergehenden Anspruch, wobei
jeder der Identifizierungsionenpeaks einen ersten Identifizierungsionenpeak und einen zweiten Identifizierungsionenpeak umfasst,
jedes der gemessenen Peakverhältnisse ein erstes gemessenes Peakverhältnis und ein zweites gemessenes Peakverhältnis umfasst,
jeder der Peakverhältnisfehler einen ersten Peakverhältnisfehler und einen zweiten Peakverhältnisfehler umfasst und
die Elemente erste Elemente, welche Fehlersätze darstellen, die aus den Retentionszeitfehlern und den ersten Peakverhältnisfehlern bestehen, und zweite Elemente umfassen, welche Fehlersätze darstellen, die aus den Retentionszeitfehlern und den zweiten Peakverhältnisfehlern bestehen.

8. Massenspektrometriesystem nach Anspruch 7, wobei
das Diagramm (72A) eine Mehrzahl von Verknüpfungen (84, 88) enthält, welche Korrespondenzbeziehungen zwischen den ersten Elementen und den zweiten Elementen zeigen.

9. Massenspektrometriesystem nach Anspruch 8, wobei
die Verknüpfungen (84, 88) Linien sind, welche parallel zu der Peakverhältnisfehlerachse sind und zwischen den ersten Elementen und den zweiten Elementen verbinden.

10. Peakauswertungsverfahren, umfassend:
einen Schritt (S14) eines Identifizierens, auf Grundlage von aus einer Mehrzahl von Verbindungen abgeleiteten Quantifizierungsionenpeaks und Identifizierungsionenpeaks, gemessener Retentionszeiten und gemessener Peakverhältnisse, welche den Verbindungen entsprechen; und
einen Schritt (S14) eines Berechnens von Retentionszeitfehlern durch Vergleichen der gemessenen Retentionszeiten mit Standardretentionszeiten der Verbindungen und eines Berechnens von Peakverhältnisfehlern durch Vergleichen der gemessenen Peakverhältnisse mit Standardpeakverhältnissen der Verbindungen;
**dadurch gekennzeichnet, dass** das Verfahren einen Schritt (S16) umfasst, eines Plottens in ein Koordinatensystem mit einer Retentionszeitfehlerachse und einer Peakverhältnisfehlerachse einer Mehrzahl von Elementen, welche Fehlersätze darstellen, die aus den Retentionszeitfehlern und den Peakverhältnisfehlern bestehen, und dadurch eines Erzeugens eines Diagramms (62, 72, 72A, 72B) zum Auswerten der Quantifizierungsionenpeaks und der Identifizierungsionenpeaks.

11. Programm, welches in einer Informationsverarbeitungsvorrichtung auszuführen ist, umfassend:
eine Funktion (38, 40) eines Identifizierens, auf Grundlage von aus einer Mehrzahl von Verbindungen abgeleiteten Quantifizierungsionenpeaks und Identifizierungsionenpeaks, gemessener Retentionszeiten und gemessener Peakverhältnisse, welche den Verbindungen entsprechen; und
eine Funktion (42, 44) eines Berechnens von Retentionszeitfehlern durch Vergleichen der gemessenen Retentionszeiten mit Standardretentionszeiten der Verbindungen und eines Berechnens von Peakverhältnisfehlern durch Vergleichen der gemessenen Peakverhältnisse mit Standardpeakverhältnissen der Verbindungen;
**dadurch gekennzeichnet, dass** das Programm eine Funktion (48) umfasst, eines Plottens in ein Koordinatensystem mit einer Retentionszeitfehlerachse und einer Peakverhältnisfehlerachse einer Mehrzahl von Elementen, welche Fehlersätze darstellen, die aus den Retentionszeitfehlern und den Peakverhältnisfehlern bestehen, und dadurch eines Erzeugens eines Diagramms (62, 72, 72A, 72B) zum Auswerten der Quantifizierungsionenpeaks und der Identifizierungsionenpeaks.

## Revendications

1. Système de spectrométrie de masse, comprenant :
un dispositif de spectrométrie de masse configuré pour effectuer une spectrométrie de masse sur une pluralité de composés séparés séquentiellement d'un échantillon et générer ainsi des pics d'ions de quantification et des pics d'ions d'identification dérivés des composés ;
une première unité de traitement (38, 40) configurée pour identifier, sur la base des pics d'ions de quantification et des pics d'ions d'identification, des temps de rétention mesurés et des rapports de pics mesurés correspondant aux composés ; et
une deuxième unité de traitement (42, 44) configurée pour calculer des erreurs de temps de rétention en comparant les temps de rétention mesurés avec les temps de rétention standards des composés, et calculer des erreurs de rapport de pics en comparant les rapports de pics mesurés avec les rapports de pics standards des composés ;
**caractérisé en ce que** le système comprend
une troisième unité de traitement (48) configurée pour tracer, dans un système de coordonnées avec un axe d'erreur de temps de rétention et un axe d'erreur de rapport de pics, une pluralité d'éléments représentant des ensembles d'erreurs composés des erreurs de temps de rétention et des erreurs de rapport de pics, et ainsi créer un graphique (62, 72, 72A, 72B) pour évaluer les pics d'ions de quantification et les pics d'ions d'identification.

2. Système de spectrométrie de masse selon la revendication 1, comprenant :
une unité d'évaluation (46) configurée pour évaluer les erreurs de temps de rétention et les erreurs de rapport de pics, dans lequel
le tableau contient des informations indiquant un résultat d'évaluation par l'unité d'évaluation.

3. Système de spectrométrie de masse selon la revendication 2, dans lequel
l'unité d'évaluation (46) est configurée pour déterminer si chacune des erreurs de temps de rétention se trouve ou non dans une première plage admissible, et pour déterminer si chacune des erreurs de rapport de pics se trouve ou non dans une seconde plage admissible, et
le résultat de l'évaluation par l'unité d'évaluation (46) contient un résultat de détermination pour savoir si chacune des erreurs de temps de rétention se trouve ou non dans la première plage admissible, et un résultat de détermination pour savoir si chacune des erreurs de rapport de pics se trouve ou non dans la seconde plage admissible.

4. Système de spectrométrie de masse selon la revendication 3, dans lequel
les informations comprennent un objet (70, 80) indiquant la première plage admissible et la seconde plage admissible.

5. Système de spectrométrie de masse selon la revendication 3, dans lequel la troisième unité de traitement (50) est configurée pour modifier un format d'affichage des éléments sur la base du résultat de l'évaluation par l'unité d'évaluation, et
les informations comprennent le format d'affichage des éléments.

6. Système de spectrométrie de masse selon l'une quelconque des revendications précédentes, dans lequel
la troisième unité de traitement (50) est configurée pour provoquer l'affichage d'un pic d'ions de quantification spécifique et d'un pic d'ions d'identification spécifique correspondant à un élément spécifique sélectionné par un utilisateur parmi les éléments,
un correcteur (51) est fourni, qui est configuré pour corriger le pic d'ions de quantification spécifique et le pic d'ions d'identification spécifique selon une instruction de l'utilisateur, et
conformément à la correction du pic d'ions de quantification spécifique et du pic d'ions d'identification spécifique, une position d'affichage de l'élément spécifique dans le graphique est modifiée.

7. Système de spectrométrie de masse selon l'une quelconque des revendications précédentes, dans lequel
chacun des pics d'ions d'identification inclut un premier pic d'ions d'identification et un second pic d'ions d'identification,
chacun des rapports de pics mesurés comprend un premier rapport de pics mesuré et un second rapport de pics mesuré,
chacune des erreurs de rapport de pics comprend une première erreur de rapport de pics et une seconde erreur de rapport de pics, et
les éléments comprennent des premiers éléments représentant des ensembles d'erreurs composés des erreurs de temps de rétention et des premières erreurs de rapport de pics, et des seconds éléments représentant des ensembles d'erreurs composés des erreurs de temps de rétention et des secondes erreurs de rapport de pics.

8. Système de spectrométrie de masse selon la revendication 7, dans lequel
le graphique (72A) contient une pluralité de liaisons (84, 88) montrant des relations de correspondance entre les premiers éléments et les seconds éléments.

9. Système de spectrométrie de masse selon la revendication 8, dans lequel
les liaisons (84, 88) sont des lignes parallèles à l'axe d'erreur de rapport de pics et reliant les premiers éléments et les seconds éléments.

10. Procédé d'évaluation de pic, comprenant :
une étape (S14) d'identification, sur la base de pics d'ions de quantification et de pics d'ions d'identification dérivés d'une pluralité de composés, de temps de rétention mesurés et de rapports de pics mesurés correspondant aux composés ; et
une étape (S14) de calcul d'erreurs de temps de rétention en comparant les temps de rétention mesurés avec les temps de rétention standards des composés, et de calcul d'erreurs de rapport de pics en comparant les rapports de pics mesurés avec les rapports de pics standards des composés ;
**caractérisé en ce que** le procédé comprend
une étape (S16) consistant à tracer, dans un système de coordonnées avec un axe d'erreur de temps de rétention et un axe d'erreur de rapport de pics, une pluralité d'éléments représentant des ensembles d'erreurs composés des erreurs de temps de rétention et des erreurs de rapport de pics, et à créer ainsi un graphique (62, 72, 72A, 72B) pour évaluer les pics d'ions de quantification et les pics d'ions d'identification.

11. Programme à exécuter dans un dispositif de traitement d'informations, comprenant :
une fonction (38, 40) d'identification, sur la base de pics d'ions de quantification et de pics d'ions d'identification dérivés d'une pluralité de composés, de temps de rétention mesurés et de rapports de pics mesurés correspondant aux composés ; et
une fonction (42, 44) de calcul d'erreurs de temps de rétention en comparant les temps de rétention mesurés avec les temps de rétention standards des composés, et de calcul d'erreurs de rapport de pics en comparant les rapports de pics mesurés avec les rapports de pics standards des composés ;
**caractérisé en ce que** le programme comprend
une fonction (48) de traçage, dans un système de coordonnées avec un axe d'erreur de temps de rétention et un axe d'erreur de rapport de pics, d'une pluralité d'éléments représentant des ensembles d'erreurs composés des erreurs de temps de rétention et des erreurs de rapport de pics, et créer ainsi un graphique (62, 72, 72A, 72B) pour évaluer les pics d'ions de quantification et les pics d'ions d'identification.
